# EUROPEAN PATENT APPLICATION

(11) **EP 4 195 317 A1**
(43) Date of publication of application: **14.06.2023**
(21) Application number: 21927064.2
(22) Date of filing: 15.10.2021
(51) Int. Cl.: H01M 4/134, H01M 4/36

(54) **NEGATIVE ELECTRODE SHEET, SECONDARY BATTERY, BATTERY MODULE, BATTERY PACK, AND ELECTRICAL APPARATUS**

(71) Applicant: Contemporary Amperex Technology Co., Limited, Ningde City, Fujian 352100 (CN)
(72) Inventor: WEI, Jianren, Ningde, Fujian 352100 (CN); SUN, Xin, Ningde, Fujian 352100 (CN); WU, Lili, Ningde, Fujian 352100 (CN); LI, Xuan, Ningde, Fujian 352100 (CN); SU, Huisen, Ningde, Fujian 352100 (CN); CHEN, Xingbu, Ningde, Fujian 352100 (CN)
(74) Representative: Ziebig Hengelhaupt Intellectual Property Attorneys Patentanwaltsanwaltskanzlei PartGmbB
(86) International application number: PCT/CN2021/124193
(87) International publication number: WO 2023/060587

(57) **Abstract**

Provided in the present application is a negative electrode plate, a secondary battery, a battery module, a battery pack and a power consuming device. The negative electrode plate comprises a first coating, a second coating and a current collector, the current collector being on one side of the second coating, the first coating being on the other side of the second coating, the first coating and the second coating comprising a silicon-based material, wherein a molar ratio of element O to element Si of the silicon-based material in the first coating is 0.5 to 1.5, and a molar ratio of element O to element Si of the silicon-based material in the second coating is less than or equal to 0.3. The present application can improve the cycle life and energy density of a battery.

## Description

### Technical Field

The present application relates to the field of lithium batteries, and in particular to a negative electrode plate, a secondary battery, a battery module, a battery pack and a power consuming device.

### Background Art

Lithium-ion batteries have the characteristics of a high specific energy, a high working voltage, a low self-discharge rate, a small volume, a light weight and the like. With the rapid development of electric vehicles, people have increasingly higher requirements on the energy density, cycle performance and the like of lithium-ion batteries. Silicon-based materials have become ideal materials for next-generation lithium-ion negative electrode materials thanks to their characteristic of a high specific capacity.

The silicon-based material undergoes a great volume change in lithium intercalation and de-intercalation processes, which affects the cycle life of a lithium-ion battery. In addition, the silicon-based material has a low first-cycle Coulombic efficiency, which affects the energy density of the lithium-ion battery.

### Summary of the Invention

The present application has been made in view of the above problems, and an objective thereof is to improve the cycle life and energy density of a lithium-ion battery.

In order to achieve the above objective, the present application provides a negative electrode plate, a secondary battery, a battery module, a battery pack and a power consuming device.

A first aspect of the present application provides a negative electrode plate, comprising a first coating, a second coating and a current collector, the current collector being on one side of the second coating, the first coating being on the other side of the second coating, the first coating and the second coating comprising a silicon-based material, wherein a molar ratio of element O to element Si of the silicon-based material in the first coating is 0.5 to 1.5, and a molar ratio of element O to element Si of the silicon-based material in the second coating is less than or equal to 0.3.

Accordingly, in the present application, the molar ratios of element O to element Si of the silicon-based materials in the first coating and the second coating are coordinately regulated, such that the first coating improves the cycle life of the lithium-ion battery, and the second coating improves the first-cycle Coulombic efficiency and energy density of the lithium-ion battery, thereby improving the cycle life and energy density of the lithium-ion battery.

In any embodiment, the molar ratio of element O to element Si of the silicon-based material in the second coating is 0.05 to 0.2, which can improve the energy density of the lithium-ion battery as well as the cycle life of the battery.

In any embodiment, a weighted gram capacity A₁ of a first coating active material and a weighted gram capacity A₂ of a second coating active material satisfy that: 0.8 ≤ A₁ : A₂ ≤ 1.2, which can reduce a risk of stripping of the lithium-ion battery in the entire life cycle, thereby improving the performance and safety of the lithium-ion battery.

In any embodiment, the weighted gram capacity A₁ of the first coating active material is 500 mAh/g to 1,000 mAh/g, and the weighted gram capacity A₂ of the second coating active material is 500 mAh/g to 1,000 mAh/g, such that a lithium-ion battery with a long cycle life and a high energy density can be obtained.

In any embodiment, the content of the silicon-based material in the first coating is 18 wt% to 55 wt%, and the content of the silicon-based material in the second coating is 7 wt% to 21 wt%, such that a lithium-ion battery with a long cycle life and a high energy density can be obtained.

In any embodiment, the first coating comprises a first binder, and the second coating comprises a second binder, which can improve an interface bonding effect between the first coating and the second coating and further reduce a risk of stripping of the first coating and the second coating, thereby improving the safety of the lithium-ion battery.

In any embodiment, the first binder and the second binder each independently comprise at least one of polyacrylic acid, polyacrylates, sodium alginate, polyacrylonitrile, polyethylene glycol, carboxymethyl chitosan and styrene butadiene rubber.

In any embodiment, the first binder and the second binder both comprise a polyacrylate-based binder, and the content of the polyacrylate-based binder in the first coating is less than that in the second coating, which can effectively improve the energy density of the battery and reduce the cost of auxiliary materials on the basis of satisfying the bonding effect.

In any embodiment, the content of the polyacrylate-based binder in the first coating is 3 wt% to 6 wt%, and the content of the polyacrylate-based binder in the second coating is 4 wt% to 7 wt%, which can effectively improve the energy density of the battery and reduce the cost of auxiliary materials on the basis of satisfying the bonding effect.

A second aspect of the present application provides a secondary battery, comprising the negative electrode plate of the first aspect of the present application.

A third aspect of the present application provides a battery module, comprising the secondary battery of the second aspect of the present application.

A fourth aspect of the present application provides a battery pack, comprising the battery module of the third aspect of the present application.

A fifth aspect of the present application provides a power consuming device, comprising at least one selected from the secondary battery of the second aspect of the present application, the battery module of the third aspect of the present application or the battery pack of the fourth aspect of the present application.

Beneficial effects of the present application:
The present application provides a negative electrode plate, a secondary battery, a battery module, a battery pack and a power consuming device. The negative electrode plate comprises a first coating and a second coating. The molar ratios of element O to element Si of the silicon-based materials in the first coating and the second coating are coordinately regulated, such that the first coating improves the cycle life of a lithium-ion battery after first lithium intercalation, and the second coating improves the first-cycle Coulombic efficiency and energy density of the lithium-ion battery, thereby improving the cycle life and energy density of the lithium-ion battery. Certainly, any product or method for implementing the present application are not necessarily required to achieve all of the above advantages simultaneously.

### Brief Description of the Drawings

In order to more clearly illustrate the technical solutions of the present application and the prior art, the accompanying drawings to be used in the embodiments and the prior art will be briefly described below. Apparently, the drawings in the following description are only some embodiments of the present application.
Fig. 1 is a schematic diagram of a negative electrode plate according to an embodiment of the present application.
Fig. 2 is a schematic diagram of a secondary battery according to an embodiment of the present application.
Fig. 3 is an exploded view of a secondary battery according to the embodiment of the present application as shown in Fig. 2.
Fig. 4 is a schematic diagram of a battery module according to an embodiment of the present application.
Fig. 5 is a schematic diagram of a battery pack according to an embodiment of the present application.
Fig. 6 is an exploded view of a battery pack according to the embodiment of the present application as shown in Fig. 5.
Fig. 7 is a schematic diagram of a power consuming device using a secondary battery according to an embodiment of the present application as a power source.

### List of reference numerals:

1 - first coating; 2 - second coating; 3 - current collector; 4 - battery module; 5 - secondary battery; 10 - battery pack; 11 - upper box body; 12 - lower box body; 51 - housing; 52 - electrode assembly; and 53 - cover plate.

### Detailed Description of Embodiments

Hereinafter, the embodiments of the negative electrode plate, positive electrode plate, secondary battery, battery module, battery pack and power consuming device of the present application are specifically disclosed in the detailed description with reference to the accompanying drawings as appropriate. However, unnecessary detailed illustrations may be omitted in some instances. For example, there are situations where detailed description of well-known items and repeated description of actually identical structures are omitted. This is to prevent the following description from being unnecessarily verbose, and facilitates understanding by those skilled in the art. Moreover, the accompanying drawings and the descriptions below are provided for enabling those skilled in the art to fully understand the present application, rather than limiting the subject matter disclosed in claims.

"Ranges" disclosed in the present application are defined in the form of lower and upper limits, and a given range is defined by selection of a lower limit and an upper limit, the selected lower and upper limits defining the boundaries of the particular range. Ranges defined in this manner may be inclusive or exclusive, and may be arbitrarily combined, that is, any lower limit may be combined with any upper limit to form a range. For example, if the ranges of 60-120 and 80-110 are listed for a particular parameter, it should be understood that the ranges of 60-110 and 80-120 are also contemplated. Additionally, if minimum range values 1 and 2 are listed, and maximum range values 3, 4, and 5 are listed, the following ranges are all contemplated: 1-3, 1-4, 1-5, 2-3, 2-4, and 2-5. In the present application, unless stated otherwise, the numerical range "a-b" represents an abbreviated representation of any combination of real numbers between a and b, where both a and b are real numbers. For example, the numerical range "0-5" means that all real numbers between "0-5" have been listed herein, and "0-5" is just an abbreviated representation of combinations of these numerical values. In addition, when a parameter is expressed as an integer of ≥ 2, it is equivalent to disclosing that the parameter is, for example, an integer of 2, 3, 4, 5, 6, 7, 8, 9, 10, 11, 12, and the like.

All the embodiments and optional embodiments of the present application can be combined with one another to form new technical solutions, unless otherwise stated.

All technical features and optional technical features of the present application can be combined with one another to form a new technical solution, unless otherwise stated.

Unless otherwise stated, all the steps of the present application can be performed sequentially or randomly, preferably sequentially. For example, the method including steps (a) and (b) indicates that the method may include steps (a) and (b) performed sequentially, and may also include steps (b) and (a) performed sequentially. For example, reference to "the method may further include step (c)" indicates that step (c) may be added to the method in any order, e.g., the method may include steps (a), (b) and (c), steps (a), (c) and (b), and also steps (c), (a) and (b), etc.

The terms "comprise" and "include" mentioned in the present application are openended or closed-ended, unless otherwise stated. For example, "comprise" and "include" may mean that other components not listed may further be comprised or included, or only the listed components may be comprised or included.

In the present application, the term "or" is inclusive unless otherwise specified. For example, the phrase "A or B" means "A, B, or both A and B." More specifically, a condition "A or B" is satisfied by any one of the following: A is true (or present) and B is false (or not present); A is false (or not present) and B is true (or present); or both A and B are true (or present).

In the research process of silicon-based material batteries, the applicant has found that the silicon-based material has a problem of large volume expansion in the charge and discharge processes, so that the cycle life of the silicon-based material battery is difficult to meet the application requirements. The silicon-based material has a low first-cycle Coulombic efficiency, which affects the energy density of the silicon-based material battery. In order to improve the cycle life and energy density of the silicon-based material battery such that the silicon-based material battery has better performance such as a longer range and a longer life when used in a power consuming device, in view of this, the present application provides a negative electrode plate, a secondary battery, a battery module, a battery pack and a power consuming device.

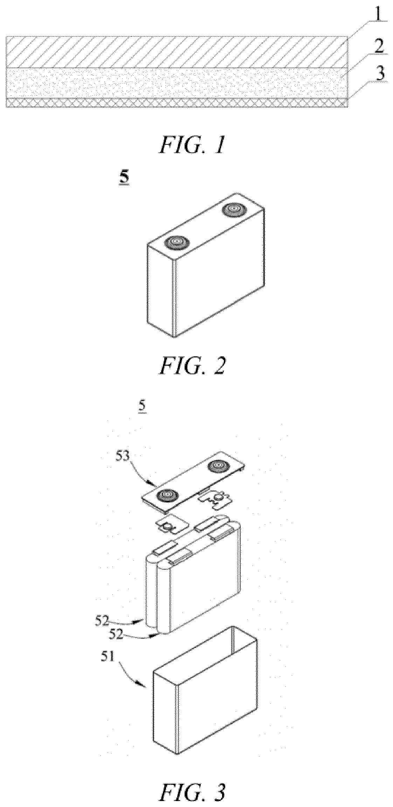

In an embodiment of the present application, the present application provides a negative electrode plate, as shown in Fig. 1, comprising a first coating 1, a second coating 2 and a current collector 3, the current collector 3 being on one side of the second coating 2, the first coating 1 being on the other side of the second coating 2, the first coating 1 and the second coating 2 comprising a silicon-based material, wherein a molar ratio of element O to element Si of the silicon-based material in the first coating 1 is 0.5 to 1.5, and preferably 0.8 to 1.2, and a molar ratio of element O to element Si of the silicon-based material in the second coating 2 is less than or equal to 0.3.

Although the mechanism is not yet clear, the applicant has unexpectedly discovered: as the negative electrode plate of the present application comprises a first coating and a second coating, by coordinately regulating the molar ratio of element O to element Si of the silicon-based material in the first coating and the molar ratio of element O to element Si of the silicon-based material in the second coating to be within the scope of the present application, the first coating improves the cycle life of the lithium-ion battery, and the second coating improves the first-cycle Coulombic efficiency and energy density of the lithium-ion battery, thereby improving the cycle life and energy density of the lithium-ion battery as a whole.

The applicant has found that, without being bound to any theory, for a silicon-based negative electrode material, the higher the content of element oxygen in the material, the larger the proportion of the components of lithium oxide and lithium silicates (e.g., Li₂SiO₃, Li₄SiO₄, Li₆Si₂O₇, etc.) having the buffering effect that are formed after first-cycle lithium intercalation. The presence of these components can effectively alleviate the volume change of the silicon-based material in the lithium intercalation process, such that the degree of rupture and repair of a solid electrolyte interface (SEI) membrane is effectively improved in the life cycle of the lithium-ion battery, thereby improving the cycle life of the lithium-ion battery. However, the presence of these components not provided with reversible lithium intercalation and de-intercalation reduces the reversible gram capacity of the silicon-based material and thus affects the first-cycle Coulombic efficiency of the lithium-ion battery, thereby resulting in a certain loss in the energy density of the lithium-ion battery. On the contrary, when the content of element oxygen in the silicon-based material is reduced, the expansion of the silicon-based material is increased in the lithium intercalation and de-intercalation processes, and the capacity decay of the silicon-based material is faster with the increasing cycle number, but the first-cycle Coulombic efficiency of the lithium-ion battery is high, and correspondingly, the energy density is also high.

The applicant has also found that, without being limited to any theory, in the charge and discharge processes of a porous electrode, due to the existence of ohmic polarization and diffusion polarization in a liquid phase, the charge and discharge currents are more concentrated on one side of an electrode plate close to a solution, that is, the closer the particles of an active material to a surface of the plate (namely, one side of an electrolyte solution), the larger the throughput of lithium de-intercalation and lithium intercalation that the active material bears in the charge and discharge processes.

Based on this, in the present application, the first coating of the negative electrode plate is provided close to the electrolyte solution, in order to bear more throughput of lithium ions during the use of the battery, while the molar ratio of element O to element Si of the silicon-based material in the first coating is 0.5 to 1.5, and many active substances such as lithium oxide and lithium silicate for buffering volume expansion are formed after the first lithium intercalation, thereby improving the cycle life of the lithium-ion battery. The second coating is provided close to the current collector, and the molar ratio of element O to element Si of the silicon-based material in the second coating is less than or equal to 0.3, which can reduce the amount of active lithium consumed in the first lithium intercalation process of the negative electrode plate and improve the first-cycle Coulombic efficiency and energy density of the lithium-ion battery. The negative electrode plate of the present application comprises the first coating and the second coating such that the lithium-ion battery has a high energy density, a high first-cycle Coulombic efficiency and a long cycle life.

In some embodiments, the silicon-based material in the first coating of the present application may be a silicon-oxygen material (expressed as SiOₓ); and the silicon-based material in the second coating may be a silicon-oxygen material, or an elemental silicon material.

In some embodiments, the molar ratio of element O to element Si of the silicon-based material in the first coating is 0.8 to 1.2, and the molar ratio of element O to element Si of the silicon-based material in the second coating is 0.05 to 0.2. The applicant has found that, by controlling the molar ratio of element O to element Si of the silicon-based material in the first coating and the molar ratio of element O to element Si of the silicon-based material in the second coating to be within the above ranges, the energy density of the lithium-ion battery as well as the cycle life of the battery can be improved.

In some embodiments, a weighted gram capacity A₁ of a first coating active material and a weighted gram capacity A₂ of a second coating active material satisfy that: 0.8 ≤ A₁ : A₂ ≤ 1.2. In the present application, a weighted gram capacity A of an active material in a certain coating refers to a weighted value of a reversible lithium intercalation and de-intercalation gram capacity of the silicon-based material and a reversible lithium intercalation and de-intercalation gram capacity of other active components in the active material of the coating, and the weighted gram capacity A is calculated through the following expression: A = Σnᵢ × xᵢ, in mAh/g. Herein, xᵢ denotes the proportion by weight of the type-i active component in the coating based on the total active material, and Σxᵢ = 1; and nᵢ denotes a reversible gram capacity of the type-i active component in the coating, in mAh/g.

The applicant has found that, for a composite electrode plate containing both a carbon material and a silicon-based material, in the case of a fixed composition of the silicon-based material, the higher the proportion of the silicon-based material, the higher the weighted gram capacity, but the greater the rebound of the electrode plate in the same state of charge. When the difference in weighted gram capacity between the first coating and the second coating is too large, in the lithium intercalation and de-intercalation processes of the electrode plate, the difference in expansion stress experienced by the first coating and the second coating is too large, and the interfacial compatibility between the two coatings becomes poor. In a fully-charged state or in the life cycle of the battery, it is possible that the first coating is separated from the second coating to cause stripping, and consequently, a part of the active material in the first coating may be detached from a conductive network and cannot participate in lithium intercalation and de-intercalation, which may cause lithium evolution due to capacity mismatching of the anode and the cathode in local regions, thereby resulting in performance problems and even safety problems of the lithium-ion battery.

In the present application, by controlling a ratio of the weighted gram capacity A₁ of the first coating active material and the weighted gram capacity A₂ of the second coating active material to be within the above range, in different states of capacity attenuation, during the intercalation and de-intercalation of lithium ions of the plate, a good interfacial compatibility is kept between the first coating and the second coating, and the stress difference between the two coatings is kept within a small range, thereby reducing a risk of stripping of the lithium-ion battery in the entire life cycle of the lithium-ion battery and improving the performance and safety of the lithium-ion battery.

In some embodiments, the weighted gram capacity A₁ of the first coating active material is 500 mAh/g to 1,000 mAh/g, and the weighted gram capacity A₂ of the second coating active material is 500 mAh/g to 1,000 mAh/g. Without being limited to any theory, by coordinately controlling the weighted gram capacity A₁ of the first coating active material and the weighted gram capacity A₂ of the second coating active material to be within the above ranges, the expansion of the negative electrode plate in the cycle process can be controlled within a suitable range, and high gram capacity utilization is also achieved, such that a lithium-ion battery with a long cycle life and a high energy density is obtained.

In some embodiments, the content of the silicon-based material in the first coating is 18 wt% to 55 wt%, and the content of the silicon-based material in the second coating is 7 wt% to 21 wt%. Without being limited to any theory, by coordinately controlling the content of the silicon-based material in the first coating and the content of the silicon-based material in the second coating to be within the above ranges, the expansion of the negative electrode plate in the cycle process can be controlled within a suitable range, and high gram capacity utilization is also achieved, such that a lithium-ion battery with a long cycle life and a high energy density is obtained.

In some embodiments, the first coating comprises a first binder, and the second coating comprises a second binder. In the present application, the first binder and the second binder may be the same, or different. By adding the first binder into the first coating and adding the second binder into the second coating, an interface bonding effect between the first coating and the second coating can be improved, and a risk of stripping of the first coating and the second coating is further reduced, thereby improving the safety of the lithium-ion battery.

The first binder and the second binder are not particularly limited in the present application as long as the objectives of the present application can be achieved. In some embodiments, the first binder and the second binder each independently comprise at least one of polyacrylic acid, polyacrylates, sodium alginate, polyacrylonitrile, polyethylene glycol, carboxymethyl chitosan and styrene butadiene rubber.

In some embodiments, the first binder and the second binder both comprise a polyacrylate-based binder, and the content of the polyacrylate-based binder in the first coating is less than that in the second coating. In the present application, when the first coating and the second coating of the negative electrode plate comprise a silicon-based material, and the first binder and the second binder both comprise a polyacrylate-based binder, the polyacrylate-based binder can form a strong hydrogen-bonding interaction with the silicon-based material to effectively coat the surface of the silicon-based material, thereby alleviating the volume expansion of the silicon-based material in the charge and discharge processes. The applicant has found that, because of a higher oxygen-silicon molar ratio, the silicon-based material in the first coating has a smaller volume expansion than in the second coating in the cycle process of the lithium-ion battery, and thus, by controlling the content of the polyacrylate-based binder in the first coating to be less than that in the second coating, the energy density of the battery can be improved and the cost of auxiliary materials can be reduced on the basis of satisfying the bonding effect.

In some embodiments, the content of the polyacrylate-based binder in the first coating is 3 wt% to 6 wt%, and the content of the polyacrylate-based binder in the second coating is 4 wt% to 7 wt%. The applicant has found that, without being limited to any theory, by controlling the content of the polyacrylate-based binder in the first coating and the second coating to be within the above range, the energy density of the battery can be effectively improved and the cost of auxiliary materials can be reduced on the basis of satisfying the bonding effect.

In the present application, a method for preparing a silicon-based material is not particularly limited, and for example, a silicon-based material can be prepared by the following step:
a silicon dioxide powder and an elemental silicon powder are subjected to a high-temperature gas-phase reaction in a non-oxidizing gas atmosphere, wherein a ratio between the elements oxygen and silicon in the obtained silicon-based material is adjusted by adjusting a ratio of the silicon dioxide powder to the elemental silicon powder. The particle sizes of the above silicon dioxide powder and elemental silicon powder are not particularly limited in the present application, as long as the requirements of the present application can be met. For example, the average particle size of the silicon dioxide powder is 1 µm to 10 µm, and the average particle size of the elemental silicon powder is 1 µm to 10 µm. The non-oxidizing gas atmosphere is not particularly limited in the present application, and may be, for example, an argon atmosphere or a hydrogen atmosphere. The temperature of the gas-phase reaction is not particularly limited in the present application, as long as the requirements of the present application are met. For example, the temperature is 1,300°C to 1,400°C.

In some embodiments, the prepared silicon-oxygen material may further be coated or compounded with other active materials, for use in a lithium-ion battery.

In addition, the secondary battery, battery module, battery pack and power consuming device of the present application are described below with reference to the accompanying drawings as appropriate.

In an embodiment of the present application, a secondary battery is provided, comprising the negative electrode plate according to any one of the above embodiments. The secondary battery of the present application may refer to the lithium-ion battery according to any one of the above embodiments.

Typically, a secondary battery comprises a positive electrode plate, a negative electrode plate, an electrolyte and a separator. In the charge and discharge processes of the battery, active ions are intercalated and de-intercalated back and forth between the positive electrode plate and the negative electrode plate. The electrolyte is located between the positive electrode plate and the negative electrode plate and functions for ionic conduction. The separator is provided between the positive electrode plate and the negative electrode plate, and mainly prevents the positive and negative electrodes from short-circuiting and enables ions to pass through.

### [Positive electrode plate]

The positive electrode plate comprises a positive electrode current collector and a positive electrode film layer provided on at least one surface of the positive electrode current collector. As examples, the positive electrode current collector has two surfaces opposite in its own thickness direction, and the positive electrode film layer is provided on either or both of the two opposite surfaces of the positive electrode current collector.

In some embodiments, the positive electrode current collector may be a metal foil or a composite current collector. For example, as a metal foil, an aluminum foil may be used. The composite current collector may comprise a polymer material substrate and a metal layer formed on at least one surface of the polymer material substrate. The composite current collector can be formed by forming a metal material (aluminum, an aluminum alloy, nickel, a nickel alloy, titanium, a titanium alloy, silver and a silver alloy, etc.) on a polymer material substrate (e.g., polypropylene (PP), polyethylene terephthalate (PET), polybutylene terephthalate (PBT), polystyrene (PS), polyethylene (PE), etc.).

In some embodiments, the positive electrode active material can be a positive electrode active material well known in the art for batteries. As an example, the positive electrode active material may include at least one of the following materials: lithium-containing phosphates of an olivine structure, lithium transition metal oxides and their respective modified compounds. However, the present application is not limited to these materials, and other conventional materials that can be used as positive electrode active materials for batteries may also be used. These positive electrode active materials may be used alone or in combination of two or more. Herein, examples of the lithium transition metal oxides may include, but are not limited to, at least one of lithium cobalt oxide (e.g., LiCoO₂), lithium nickel oxide (e.g., LiNiO₂), lithium manganese oxide (e.g., LiMnO₂, LiMn₂O₄), lithium nickel cobalt oxide, lithium manganese cobalt oxide, lithium nickel manganese oxide, lithium nickel cobalt manganese oxide (e.g., LiNi_{1/3}Co_{1/3}Mn_{1/3}O₂ (also referred to as NCM₃₃₃)), LiNi_{0.5}Co_{0.2}Mn_{0.3}O₂ (also referred to as NCM₅₂₃), LiNi_{0.5}Co_{0.25}Mn_{0.25}O₂ (also referred to as NCM₂₁₁), LiNi_{0.6}Co_{0.2}Mn_{0.2}O₂ (also referred to as NCM₆₂₂), LiNi_{0.8}Co_{0.1}Mn_{0.1}O₂ (also referred to as NCM₈₁₁), lithium nickel cobalt aluminum oxide (e.g., LiNi_{0.85}Co_{0.15}Al_{0.05}O₂), and modified compounds thereof, and the like. Examples of the lithium-containing phosphates of an olivine structure may include, but are not limited to, at least one of lithium iron phosphate (e.g., LiFePO₄ (also referred to as LFP)), lithium iron phosphate and carbon composites, lithium manganese phosphate (e.g., LiMnPO₄), lithium manganese phosphate and carbon composites, lithium iron manganese phosphate, and lithium iron manganese phosphate and carbon composites.

In some embodiments, the positive electrode film layer may optionally comprise a binder. As an example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylate resin.

In some embodiments, the positive electrode film layer may optionally comprise a conductive agent. As an example, the conductive agent may include at least one of superconducting carbon, acetylene black, carbon black, Ketjen black, carbon dots, carbon nanotubes, graphene, and carbon nanofibers.

In some embodiments, the positive electrode plate can be prepared as follows: the above-mentioned components for preparing the positive electrode plate, such as a positive electrode active material, a conductive agent, a binder and any other components, are dispersed in a solvent (e.g., N-methylpyrrolidone) to form a positive electrode slurry; and the positive electrode slurry is coated onto a positive electrode current collector, followed by procedures such as drying and cold pressing, to obtain a positive electrode plate.

### [Negative electrode plate]

In some embodiments, the negative electrode current collector of the negative electrode plate may be a metal foil or a composite current collector. For example, as a metal foil, a copper foil may be used. The composite current collector may comprise a polymer material substrate and a metal layer formed on at least one surface of the polymer material substrate. The composite current collector can be formed by forming a metal material (copper, a copper alloy, nickel, a nickel alloy, titanium, a titanium alloy, silver and a silver alloy, etc.) on a polymer material substrate (e.g., polypropylene (PP), polyethylene terephthalate (PET), polybutylene terephthalate (PBT), polystyrene (PS), polyethylene (PE), etc.).

In some embodiments, the negative electrode plate can be prepared as follows: a first negative electrode slurry and a second negative electrode slurry are prepared; the second negative electrode slurry is coated on the current collector to form a second coating, and then the first negative electrode slurry is coated on a surface of the second coating to form a first coating; or a double-sided coating device may also be used in the coating to coat the first negative electrode slurry and the second negative electrode slurry on the current collector simultaneously; and procedures such as drying and cold pressing are performed to obtain a negative electrode plate, in which the current collector is on one side of the second coating, and the first coating is on the other side of the second coating.

### [Electrolyte]

The electrolyte is located between the positive electrode plate and the negative electrode plate and functions for ionic conduction. The type of the electrolyte is not specifically limited in the present application, and can be selected according to actual requirements. For example, the electrolyte may be liquid, gel or all-solid.

In some embodiments, an electrolyte solution is used as the electrolyte. The electrolyte solution comprises an electrolyte salt and a solvent.

In some embodiments, the electrolyte salt may be selected from at least one of lithium hexafluorophosphate, lithium tetrafluoroborate, lithium perchlorate, lithium hexafluoroarsenate, lithium bisfluorosulfonimide, lithium bistrifluoromethanesulfonimide, lithium trifluoromethanesulfonate, lithium difluorophosphate, lithium difluorooxalate borate, lithium dioxalate borate, lithium difluorodioxalate phosphate and lithium tetrafluorooxalate phosphate.

In some embodiments, the solvent may be selected from at least one of ethylene carbonate, propylene carbonate, ethyl methyl carbonate, diethyl carbonate, dimethyl carbonate, dipropyl carbonate, methyl propyl carbonate, ethyl propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, dimethyl sulfone, ethyl methyl sulfone, and diethyl sulfone.

In some embodiments, the electrolyte solution may optionally comprise an additive. For example, the additive may include a negative electrode film-forming additive, a positive electrode film-forming additive, and also an additive that can improve certain performances of the battery, such as an additive that improves the overcharge performance of the battery, or an additive that improves the high-temperature performance or low-temperature performance of the battery.

### [Separator]

In some embodiments, the secondary battery further comprises a separator. The type of the separator is not particularly limited in the present application, and any well-known porous-structure separator with good chemical stability and mechanical stability may be selected.

In some embodiments, the material of the separator may be selected from at least one of glass fibers, non-woven fabrics, polyethylene, polypropylene and polyvinylidene fluoride. The separator may be a single-layer film, or a multi-layer composite film, which is not limited particularly. When the separator is a multi-layer composite film, the materials in respective layers may be the same or different, which is not limited particularly.

In some embodiments, the positive electrode plate, the negative electrode plate and the separator can be made into an electrode assembly by a winding process or a lamination process.

In some embodiments, the secondary battery may comprise an outer package. The outer package can be used to encapsulate the above electrode assembly and electrolyte.

In some embodiments, the outer package of the secondary battery may be a hard shell, for example, a hard plastic shell, an aluminum shell, a steel shell, etc. The outer package of the secondary battery may also be a soft bag, such as a pouch-type soft bag. The material of the soft bag may be plastics, and the examples of the plastics may include polypropylene, polybutylene terephthalate, and polybutylene succinate, etc.

The shape of the secondary battery is not particularly limited in the present application, and may be cylindrical, square or of any other shape. For example, Fig. 2 shows a secondary battery 5 with a square structure as an example.

In some embodiments, referring to Fig. 3, the outer package may comprise a housing 51 and a cover plate 53. Herein, the housing 51 may comprise a bottom plate and side plates connected to the bottom plate, and the bottom plate and the side plates enclose to form an accommodating cavity. The housing 51 has an opening in communication with the accommodating cavity, and the cover plate 53 can cover the opening to close the accommodating cavity. The positive electrode plate, the negative electrode plate and the separator can form an electrode assembly 52 by a winding process or a lamination process. The electrode assembly 52 is encapsulated in the accommodating cavity. An electrolyte solution is infiltrated into the electrode assembly 52. The number of the electrode assemblies 52 contained in the secondary battery 5 may be one or more, and can be selected by those skilled in the art according to actual requirements.

In some embodiments, the secondary battery can be assembled into a battery module, and the number of the secondary batteries contained in the battery module may be one or more, and the specific number can be selected by those skilled in the art according to the application and capacity of the battery module.

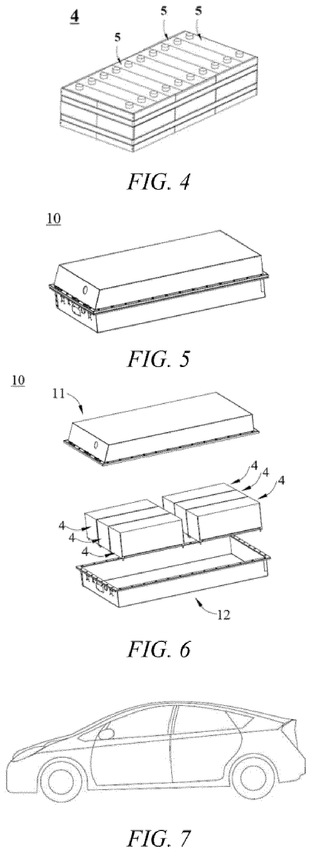

Fig. 4 shows a battery module 4 as an example. Referring to Fig. 4, in the battery module 4, a plurality of secondary batteries 5 may be arranged in sequence in the length direction of the battery module 4. Apparently, the secondary batteries may also be arranged in any other manner. Furthermore, the plurality of secondary batteries 5 may be fixed by fasteners.

Optionally, the battery module 4 may also comprise a housing with an accommodating space, and a plurality of secondary batteries 5 are accommodated in the accommodating space.

In some embodiments, the above battery module may also be assembled into a battery pack, the number of the battery modules contained in the battery pack may be one or more, and the specific number can be selected by those skilled in the art according to the application and capacity of the battery pack.

Fig. 5 and Fig. 6 show a battery pack 10 as an example. Referring to Fig. 5 and Fig. 6, the battery pack 10 may comprise a battery box and a plurality of battery modules 4 provided in the battery box. The battery box comprises an upper box body 11 and a lower box body 12, wherein the upper box body 11 can cover the lower box body 12 to form a closed space for accommodating the battery modules 4. A plurality of battery modules 4 may be arranged in the battery box in any manner.

In addition, the present application further provides a power consuming device. The power consuming device comprises at least one of the secondary battery, battery module, or battery pack provided by the present application. The secondary battery, battery module or battery pack can be used as a power source of the power consuming device or as an energy storage unit of the power consuming device. The power consuming device may include a mobile device (e.g., a mobile phone, a laptop computer, etc.), an electric vehicle (e.g., a pure electric vehicle, a hybrid electric vehicle, a plug-in hybrid electric vehicle, an electric bicycle, an electric scooter, an electric golf cart, an electric truck), an electric train, ship and satellite, an energy storage system, and the like, but is not limited thereto.

For the power consuming device, the secondary battery, battery module or battery pack can be selected according to the usage requirements thereof.

Fig. 7 shows a power consuming device as an example. The power consuming device may be a pure electric vehicle, a hybrid electric vehicle, or a plug-in hybrid electric vehicle, etc. In order to meet the requirements of the power consuming device for a high power and a high energy density of a secondary battery, a battery pack or a battery module may be used.

As another example, the device may be a mobile phone, a tablet computer, a laptop computer, etc. The device is generally required to be thin and light, and may use a secondary battery as a power source.

### Examples

Hereinafter, the examples of the present application will be described. The examples described below are exemplary and are merely for explaining the present application, and should not be construed as limiting the present application. The techniques or conditions that are not specified in examples are according to the techniques or conditions described in documents in the art or the product introduction. The reagents or instruments used, if they are not marked with the manufacturer, are common products that are commercially available.

### Example 1

### <Preparation of positive electrode plate>

A positive electrode active material LiNi_{0.8}Co_{0.1}Mn_{0.1}O₂, a conductive agent conductive carbon black and a binder polyvinylidene fluoride (PVDF) were mixed in a weight ratio of 96 : 2 : 2, then N-methylpyrrolidone (NMP) was added as a solvent, and the mixture was stirred under the action of a vacuum mixer until the system was homogeneous, to obtain a positive electrode slurry with a solid content of 75 wt%. The positive electrode slurry was uniformly coated on a surface of an aluminum foil with a thickness of 12 µm, followed by drying in a condition of 120°C and cold pressing, to obtain a positive electrode plate in which the thickness of the positive electrode active material layer was 60 µm; and then the procedures such as tab molding and slitting were performed to obtain a positive electrode plate.

### <Preparation of negative electrode plate>

### <Preparation of first negative electrode slurry>

A first negative electrode active material, a carbon material artificial graphite, a conductive agent conductive carbon black and a binder sodium polyacrylate were mixed in a weight ratio of 18 : 77 : 2 : 3, deionized water was added as a solvent, and the mixture was stirred under the action of a vacuum mixer until the system was homogeneous, to obtain a first negative electrode slurry with a solid content of 50 wt%.

### <Preparation of second negative electrode slurry>

A second negative electrode active material, a carbon material artificial graphite, a conductive agent conductive carbon black and a binder sodium polyacrylate were mixed in a weight ratio of 7 : 87 : 2 : 4, deionized water was added as a solvent, and the mixture was stirred under the action of a vacuum mixer until the system was homogeneous, to obtain a second negative electrode slurry with a solid content of 50 wt%.

### <Preparation of negative electrode plate containing first coating and second coating>

The prepared first negative electrode slurry and second negative electrode slurry were simultaneously coated, using a double-sided coating process, on a surface of a copper foil with a thickness of 8 µm, followed by drying in a condition of 110°C and cold pressing, to obtain a negative electrode plate in which both the first coating and the second coating had a thickness of 25 µm; and then the procedures such as tab molding and slitting were performed to obtain a negative electrode plate.

### <Preparation of electrolyte solution>

In an environment with a water content of less than 10 ppm, non-aqueous organic solvents ethylene carbonate, ethyl methyl carbonate and diethyl carbonate were mixed in a volume ratio of 1 : 1 : 1 to obtain an electrolyte solution solvent, and then a lithium salt LiPF₆ was dissolved in the mixed solvent, to make an electrolyte solution with a lithium salt concentration of 1 mol/L.

### <Preparation of separator>

A polyethylene film with a thickness of 9 µm was selected as a separator, and before use, the separator was slitted to obtain a suitable width according to the dimensions of the positive electrode plate and the negative electrode plate.

### <Preparation of lithium-ion battery>

The above positive electrode plate, separator and negative electrode plate were stacked in sequence, such that the separator was located between the positive electrode plate and the negative electrode plate to play a role of isolation, and then the stack was wound to obtain an electrode assembly; and the electrode assembly was placed in an outer package and dried, and then an electrolyte solution was injected, followed by the procedures such as vacuum encapsulation, standing, forming and shaping, to obtain a lithium-ion battery.

### Example 2 to Example 11

In <Preparation of negative electrode plate>, except that the molar ratio of element O to element Si of the first negative electrode slurry and the molar ratio of element O to element Si of the second negative electrode slurry were adjusted as shown in Table 1; the values of A₁, A₂ and A₁ : A₂ were adjusted as shown in Table 2; and the proportion of the first negative electrode active material in the first slurry, the proportion of the second negative electrode active material in the second slurry, the type and proportion of the binder in the first slurry, the type and proportion of the binder in the second slurry, the proportions of the artificial graphite and conductive carbon black in the first negative electrode slurry and the proportions of the artificial graphite and conductive carbon black in the second negative electrode slurry were adjusted as shown in Table 3, the rest were the same as in Example 1.

### Example 12

Except that in <Preparation of positive electrode plate> and <Preparation of negative electrode plate>, the positive electrode active material layer and the negative electrode active material layer were subjected to a double-sided coating process, namely, an active material layer was provided on both sides of the positive electrode current collector and the negative electrode current collector, the rest were the same as in Example 1, wherein the active material layers on both sides of the negative electrode current collector each comprised a first coating and a second coating.

### Comparative example 1

Except that <Preparation of negative electrode plate> was different from in Example 2, the rest were the same as in Example 2.

### <Preparation of negative electrode plate>

The first negative electrode slurry and second negative electrode slurry of Example 2 were mixed in a weight ratio of 1 : 1 to obtain a mixed slurry, then the mixed slurry was coated on a surface of a copper foil with a thickness of 8 µm, followed by drying in a condition of 110°C and cold pressing, to obtain a negative electrode plate in which the thickness of the negative electrode active material layer was 50 µm; and then the procedures such as tab molding and slitting were performed to obtain a negative electrode plate.

### Comparative example 2 to Comparative example 6

In <Preparation of negative electrode plate>, except that the molar ratio of element O to element Si of the first negative electrode slurry and the molar ratio of element O to element Si of the second negative electrode slurry were adjusted as shown in Table 1; the values of A₁, A₂ and A₁ : A₂ were adjusted as shown in Table 2; and the proportion of the first negative electrode active material in the first slurry, the proportion of the second negative electrode active material in the second slurry, the type and proportion of the binder in the first slurry, the type and proportion of the binder in the second slurry, the proportions of the artificial graphite and conductive carbon black in the first negative electrode slurry and the proportions of the artificial graphite and conductive carbon black in the second negative electrode slurry were adjusted as shown in Table 3, the rest were the same as in Example 1.

Relevant parameters of the above Examples 1 to 12 and Comparative examples 1 to 6 are shown in Table 1 to Table 3 below. Herein, the molar ratio of element O to element Si of the first negative electrode slurry and the molar ratio of element O to element Si of the second negative electrode slurry are shown in Table 1; the values of A₁, A₂ and A₁ : A₂ are shown in Table 2; the proportion of the first negative electrode active material in the first slurry, the proportion of the second negative electrode active material in the second slurry, the type and proportion of the binder in the first slurry, the type and proportion of the binder in the second slurry, the proportions of the artificial graphite and conductive carbon black in the first negative electrode slurry and the proportions of the artificial graphite and conductive carbon black in the second negative electrode slurry are shown in Table 3.

**Table 1 Relevant parameters of Examples 1 to 12 and Comparative examples 1 to 6**

| | First negative electrode slurry | Second negative electrode slurry | Presence of first coating and second coating |
|---|---|---|---|
| | O : Si ratio of first negative electrode active material | O : Si ratio of second negative electrode active material | |
| Example 1 | 1 : 1 | 0.1 : 1 | Yes |
| Example 2 | 1 : 1 | 0.1 : 1 | Yes |
| Example 3 | 1 : 1 | 0.1 : 1 | Yes |
| Example 4 | 1 : 1 | 0.1 : 1 | Yes |
| Example 5 | 1.5 : 1 | 0.3 : 1 | Yes |
| Example 6 | 0.5 : 1 | 0.05 : 1 | Yes |
| Example 7 | 1 : 1 | 0.1 : 1 | Yes |
| Example 8 | 1 : 1 | 0.1 : 1 | Yes |
| Example 9 | 1 : 1 | 0 : 1 (elemental silicon) | Yes |
| Example 10 | 1 : 1 | 0.1 : 1 | Yes |
| Example 11 | 1 : 1 | 0.1 : 1 | Yes |
| Example 12 | 1 : 1 | 0.1 : 1 | Yes |
| Comparative example 1 | 1 : 1 | 0.1 : 1 | No |
| Comparative example 2 | 1 : 1 | 1 : 1 | Yes |
| Comparative example 3 | 0.1 : 1 | 1 : 1 | Yes |
| Comparative example 4 | 1.85 : 1 | 0.1 : 1 | Yes |
| Comparative example 5 | 1 : 1 | 0.1 : 1 | Yes |
| Comparative example 6 | 1 : 1 | 0.1 : 1 | Yes |

**Table 2 Relevant parameters of Examples 1 to 12 and Comparative examples 1 to 6**

| | A₁ : A₂ | A₁ (mAh/g) | A₂ (mAh/g) |
|---|---|---|---|
| Example 1 | 1.01 | 549 | 546 |
| Example 2 | 1.01 | 605 | 601 |
| Example 3 | 1.01 | 860 | 853 |
| Example 4 | 1.02 | 964 | 941 |
| Example 5 | 1.02 | 565 | 553 |
| Example 6 | 1.03 | 690 | 672 |
| Example 7 | 0.81 | 605 | 743 |
| Example 8 | 1.20 | 686 | 574 |
| Example 9 | 1.00 | 605 | 602 |
| Example 10 | 1.01 | 605 | 601 |
| Example 11 | 1.02 | 607 | 598 |
| Example 12 | 1.01 | 549 | 546 |
| Comparative example 1 | 1.01 | 605 | 601 |
| Comparative example 2 | 1.00 | 605 | 605 |
| Comparative example 3 | 0.99 | 601 | 605 |
| Comparative example 4 | 0.99 | 460 | 467 |
| Comparative example 5 | 0.64 | 549 | 853 |
| Comparative example 6 | 1.58 | 860 | 546 |

**Table 3 Relevant parameters of Examples 1 to 12 and Comparative examples 1 to 6**

| | First negative electrode slurry | | | | | Second negative electrode slurry | | | | |
|---|---|---|---|---|---|---|---|---|---|---|
| | Type of binder | Prop ortio n of binde r (wt% ) | Proporti on of first negative electrod e active material (wt%) | Prop ortio n of artifi cial graph ite (wt% ) | Prop ortio n of cond uctiv e carbo n black (wt% ) | Type of binder | Proper tion of binder (wt%) | Proportio n of second negative electrode active material (wt%) | Proport ion of artificia 1 graphit e (wt%) | Pro port ion of con duct ive carb on blac k (wt %) |
| Exa mple 1 | Sodiu m polyac rvlate | 3 | 18 | 77 | 2 | Sodiu m polyac rvlate | 4 | 7 | 87 | 2 |
| Exa mple 2 | Sodiu m polyac rylate | 4 | 23 | 71 | 2 | Sodiu m polyac rylate | 5 | 9 | 84 | 2 |
| Exa mple 3 | Sodiu m polyac rylate | 5 | 46 | 46 | 3 | Sodiu m polyac rylate | 6 | 18 | 73 | 3 |
| Exa mple 4 | Sodiu m polyac rylate | 6 | 55 | 36 | 3 | Sodiu m polyac rylate | 7 | 21 | 69 | 3 |
| Exa mple 5 | Sodiu m polyac rylate | 4 | 23 | 71 | 2 | Sodiu m polyac rylate | 5 | 10 | 83 | 2 |
| Exa mple 6 | Sodiu m polyac rvlate | 4 | 23 | 71 | 2 | Sodiu m polyac rvlate | 5 | 10 | 83 | 2 |
| Exa mple 7 | Sodiu m polyac rylate | 4 | 23 | 71 | 2 | Sodiu m polyac rylate | 6 | 14 | 77 | 3 |
| Exa mple 8 | Sodiu m polyac rylate | 5 | 30 | 62 | 3 | Sodiu m polyac rylate | 5 | 8 | 85 | 2 |
| Exa mple | Sodiu m | 4 | 23 | 71 | 2 | Sodiu m | 5 | 8 | 85 | 2 |
| 9 | polyac rylate | | | | | polyac rylate | | | | |
| Exa mple 10 | Styren e butadi ene rubber | 4 | 23 | 71 | 2 | Styren e butadi ene rubber | 5 | 9 | 84 | 2 |
| Exa mple 11 | Sodiu m polyac rylate | 5 | 23 | 70 | 2 | Sodiu m polyac rylate | 4 | 9 | 85 | 2 |
| Exa mple 12 | Sodiu m polyac rylate | 3 | 18 | 77 | 2 | Sodiu m polyac rylate | 4 | 7 | 87 | 2 |
| Com parat ive exam ple 1 | Sodiu m polyac rylate | 4 | 23 | 71 | 2 | Sodiu m polyac rylate | 5 | 9 | 84 | 2 |
| Com parat ive exam ple 2 | Sodiu m polyac rylate | 4 | 23 | 71 | 2 | Sodiu m polyac rylate | 4 | 23 | 71 | 2 |
| Com parat ive exam ple 3 | Sodiu m polyac rylate | 5 | 9 | 84 | 2 | Sodiu m polyac rylate | 4 | 23 | 71 | 2 |
| Com parat ive exam ple 4 | Sodiu m polyac rylate | 4 | 23 | 71 | 2 | Sodiu m polyac rylate | 5 | 4 | 89 | 2 |
| Com parat ive exam ple 5 | Sodiu m polyac rylate | 3 | 18 | 77 | 2 | Sodiu m polyac rylate | 6 | 18 | 73 | 3 |
| Com parat ive exam ple 6 | Sodiu m polyac rylate | 5 | 46 | 46 | 3 | Sodiu m polyac rylate | 4 | 7 | 87 | 2 |

In addition, the lithium-ion batteries obtained in the above Examples 1 to 12 and Comparative examples 1 to 6, and the button batteries made from the negative electrode active materials of the above Examples 1 to 12 and Comparative examples 1 to 6 were subjected to performance testing. The test results are shown in Table 4 below.

### Test of energy density:

At a test temperature of 25°C, each of the lithium-ion batteries obtained in the examples and comparative examples was charged to 4.25 V with a constant current at 0.33C rate, then charged to 0.05C with a constant voltage, allowed to stand for 5 min and then discharged to 2.8 V at 0.33C, a discharge energy thereof was recorded, and a 0.33C discharge energy density was calculated according to the following formula: Energy density (Wh/kg) = Discharge energy (Wh) / Weight of electrochemical device (kg).

### Test of cycle life:

At a test temperature of 25°C, each of the lithium-ion batteries obtained in the examples and comparative examples was charged to 4.25 V with a constant current at 0.33C, then charged to 0.05C with a constant voltage, allowed to stand for 10 min and then discharged to 2.8 V at 0.33C. The capacity thus-obtained was an initial capacity. The cycle test was performed as follows: the lithium-ion battery was charged to 4.25 V with a constant current at 0.33C, charged to 0.05C with a constant voltage at 4.25 V, and discharged to 2.8 V at 0.33C; and a ratio of the capacity in each step to the initial capacity was calculated, to obtain a capacity attenuation curve. The number of cycles at 25°C until a capacity retention rate was 80% was recorded as the cycle life of the battery.

### Test of first charge/discharge efficiency:

Each of the lithium-ion batteries obtained in the examples and comparative examples was subjected to a charge/discharge test through a Neware CT-4000 power battery testing system, and the first charge/discharge efficiency of the lithium-ion battery was calculated.

The first efficiency was calculated by (C₁/C₂) × 100%, where C₁ was the first charge capacity of the lithium-ion battery, by the charging process as follows: the lithium-ion battery was charged to a voltage of 4.25 V with a constant current at 0.33C, and then charged to 0.05C with a constant voltage at 4.25 V; and C₂ was a corresponding capacity when the lithium-ion battery was discharged to a voltage of 2.8 V at 0.33C after the first charge following the aforementioned process.

### Test of weighted gram capacity:

The weighted gram capacities of different coatings of the negative electrode plates in Examples 1 to 12 and Comparative examples 1 to 6 were obtained as follows:
The negative electrode active material (e.g., silicon-based material and artificial graphite material) was mixed with a conductive agent conductive carbon black and a binder PVDF (polyvinylidene fluoride) in a ratio of 80 : 10 : 10, and deionized water was added and the mixture was stirred to form a slurry with a solid content of 50 wt%; a coating with a thickness of 50 µm was applied, using a scraper, to a surface of the current collector, and dried in a vacuum drying oven for 12 h in a condition of 85°C; the resulting product was cut, using a punching machine, into a disc with a diameter of 1 cm in a dry environment; in a glove box, the disc, a metal lithium plate as a counter electrode, a PE (polyethylene) composite film as a separator, and an electrolyte solution were assembled into a button battery; and a reversible gram capacity of the tested type of active components was calculated through a charge/discharge testing method. The weighted gram capacity of the active material of the first coating or the second coating was calculated through the following expression: A = x₁ × n₁ + x₂ × n₂ (mAh/g). Herein, x₁ and x₂ were the proportions by weight of the silicon-based material and the carbon material in the active material, respectively, and x₁ + x₂ = 1, n₁ denotes the reversible gram capacity of the silicon-based material, in mAh/g, and n₂ denotes the reversible gram capacity of the artificial graphite material, in mAh/g.

**Table 4: Performance test results of Examples 1 to 12 and Comparative examples 1 to 6**

| | First charge/discharge efficiency | Energy density (Wh/kg) | Cycle life (cycle) |
|---|---|---|---|
| Example 1 | 90% | 280 | 1,300 |
| Example 2 | 88% | 300 | 1,000 |
| Example 3 | 86% | 330 | 700 |
| Example 4 | 84% | 360 | 550 |
| Example 5 | 83% | 270 | 1400 |
| Example 6 | 89% | 320 | 850 |
| Example 7 | 88% | 300 | 900 |
| Example 8 | 88% | 300 | 950 |
| Example 9 | 90% | 305 | 950 |
| Example 10 | 88% | 300 | 850 |
| Example 11 | 88% | 300 | 900 |
| Example 12 | 90% | 285 | 1,300 |
| Comparative example 1 | 88% | 300 | 550 |
| Comparative example 2 | 72% | 250 | 1,050 |
| Comparative example 3 | 88% | 300 | 200 |
| Comparative example 4 | 76% | 250 | 1,200 |
| Comparative example 5 | 87% | 300 | 600 |
| Comparative example 6 | 85% | 300 | 550 |

It can be seen from the above results that, the negative electrode plates of the lithium-ion batteries of the Examples 1 to 12 each comprise a first coating and a second coating, namely, having a multi-layer structure, in which the current collector is on one side of the second coating, and the first coating is on the other side of the second coating. When the molar ratios of element O to element Si of the silicon-based materials in the first coating and the second coating are within the scope of the present application, the lithium-ion batteries have high energy density and first-cycle Coulombic efficiency as well as a long cycle life.

It can be seen from Examples 1 to 4 that, after the oxygen-silicon ratio of the silicon-based material in each coating of the negative electrode plate is determined, with the increasing content of the silicon-based material in the negative electrode plate, the weighted gram capacity utilization of the negative electrode plate can be improved, and thus the energy density of the lithium-ion battery is increased.

It can be seen from Examples 2, 5, 6 and 9 that, in the case of a relatively fixed proportion of the silicon-based material in each coating of the negative electrode plate, with the increasing oxygen-silicon molar ratios of the silicon-based materials in the first coating and the second coating, the cycle life of the lithium-ion battery is prolonged, and the energy density and the first-cycle Coulombic efficiency show a decreasing trend, but the magnitude of the decline is not significant.

It can be seen from Examples 1 to 12 that, when the proportion of the silicon-based material in each coating is controlled such that the ratio of A₁ : A₂ of the weighted gram capacity A₁ of the first coating to the weighted gram capacity A₂ of the second coating is within the scope of the present application, the lithium-ion battery is enabled to have a high energy density, a high first-cycle Coulombic efficiency and a long cycle life.

It can also be seen from Examples 1 to 9 and 11 to 12 that, when the first coating and the second coating both use a polyacrylate-based binder (e.g., sodium polyacrylate), if the content of the polyacrylate-based binder in the first coating is less than that in the second coating, the lithium-ion battery can have a longer cycle life.

The type and content of the binders in the first coating and the second coating will also affect the performance of the lithium-ion battery in general. It can be seen from Examples 1 to 12 that, as long as the type and content of the binders are within the scope of the present application, a lithium-ion battery with high energy density and first-cycle Coulombic efficiency as well as a long cycle life can be obtained.

By contrast, the negative electrode plate of the Comparative example 1 is obtained by uniformly mixing the slurry of the first coating and the slurry of the second active coating in Example 2 followed by coating, and the silicon-based material of this negative electrode plate has the same type and composition in a direction perpendicular to the current collector, and thus, the energy density and the first-cycle Coulombic efficiency in Comparative example 1 are basically consistent with those in Example 2. However, without the double-coating structure of the present application, in a cycling process of the lithium-ion battery, since the reversible capacity of the silicon-based material (namely, the second negative electrode active material) with an oxygen-silicon ratio of 0.1 : 1 close to the surface of the current collector is attenuated quickly, the cycle life of the lithium-ion battery of Comparative example 1 is only 550 cycles, which is not an effective improvement of the cycle life and makes it difficult to meet the requirements on the life of the lithium-ion battery in many application scenarios.

The oxygen-silicon molar ratios of the silicon-based materials in the first coating and the second coating used in Comparative example 2 are both 1 : 1, the first-cycle Coulombic efficiency of the obtained lithium-ion battery is reduced to 72%, and the energy density of the lithium-ion battery can only reach 250 Wh/kg, which has no significant advantages over the energy density of the lithium-ion battery without using a silicon-based material on the negative electrode, and makes it difficult to satisfy the scenarios with high requirements on energy density.

The oxygen-silicon molar ratios of the first coating and the second coating used in the negative electrode plate of Comparative example 3 are opposite to those in Example 2, the reversible capacity of the obtained lithium-ion battery in a cycling process is attenuated quickly, and the cycle life of the lithium-ion battery is only 200 cycles, which is not an effective improvement of the cycle life and makes it difficult to meet the requirements on the life of the lithium-ion battery in many application scenarios.

The oxygen-silicon molar ratio of the silicon-based material in the first coating used in Comparative example 4 is 1.85 : 1, the obtained lithium-ion battery has an extremely low first-cycle Coulombic efficiency, and the energy density of the battery is only 250 Wh/kg, which has no advantages over the lithium-ion battery without using a silicon-based material and cannot satisfy the scenarios with high requirements on energy density.

The ratios of the weighted gram capacity A₁ of the first coating to the weighted gram capacity A₂ of the second coating of the negative electrode plates in Comparative examples 5 and 6 are outside the scope of the present application, and thus the cycle life of the lithium-ion battery is shortened. It is possibly because that in the lithium intercalation and de-intercalation processes of the lithium-ion batteries in Comparative examples 5 and 6, the difference in expansion stress between the first coating and the second coating is too large, the interfacial compatibility between the first coating and the second coating is poor, and even the first coating is partially separated from the second coating, so that a part of the active material in the first coating may be detached from the conductive network in a cycling process, and the cycle life of the lithium-ion battery is affected.

It should be noted that the present application is not limited to the above embodiments. The above embodiments are exemplary only, and any embodiment that has substantially same constitutions as the technical ideas and has the same effects within the scope of the technical solution of the present application falls within the technical scope of the present application. In addition, without departing from the gist of the present application, various modifications that can be conceived by those skilled in the art to the embodiments, and other modes constructed by combining some of the constituent elements of the embodiments also fall within the scope of the present application.

## Claims

1. A negative electrode plate, comprising a first coating, a second coating and a current collector, the current collector being on one side of the second coating, the first coating being on the other side of the second coating, the first coating and the second coating comprising a silicon-based material, wherein a molar ratio of element O to element Si of the silicon-based material in the first coating is 0.5 to 1.5, and a molar ratio of element O to element Si of the silicon-based material in the second coating is less than or equal to 0.3.

2. The negative electrode plate according to claim 1, wherein the molar ratio of element O to element Si of the silicon-based material in the second coating is 0.05 to 0.2.

3. The negative electrode plate according to claim 1 or 2, wherein a weighted gram capacity A₁ of the first coating active material and a weighted gram capacity A₂ of the second coating active material satisfy that: 0.8 ≤ A₁:A₂ ≤ 1.2.

4. The negative electrode plate according to claim 3, wherein the weighted gram capacity A₁ of the first coating active material is 500 mAh/g to 1,000 mAh/g, and the weighted gram capacity A₂ of the second coating active material is 500 mAh/g to 1,000 mAh/g.

5. The negative electrode plate according to any one of claims 1 to 4, wherein the content of the silicon-based material in the first coating is 18 wt% to 55 wt%, and the content of the silicon-based material in the second coating is 7 wt% to 21 wt%.

6. The negative electrode plate according to any one of claims 1 to 5, wherein the first coating comprises a first binder, and the second coating comprises a second binder.

7. The negative electrode plate according to claim 6, wherein the first binder and the second binder each independently comprise at least one of polyacrylic acid, polyacrylates, sodium alginate, polyacrylonitrile, polyethylene glycol, carboxymethyl chitosan and styrene butadiene rubber.

8. The negative electrode plate according to claim 6, wherein the first binder and the second binder both comprise a polyacrylate-based binder, and the content of the polyacrylate-based binder in the first coating is less than that in the second coating.

9. The negative electrode plate according to claim 8, wherein the content of the polyacrylate-based binder in the first coating is 3 wt% to 6 wt%, and the content of the polyacrylate-based binder in the second coating is 4 wt% to 7 wt%.

10. A secondary battery, comprising the negative electrode plate of any one of claims 1 to 9.

11. A battery module, comprising the secondary battery of claim 10.

12. A battery pack, comprising the battery module of claim 11.

13. A power consuming device, comprising at least one of the secondary battery of claim 10, the battery module of claim 11 or the battery pack of claim 12.
